## Europäisches Patentamt

## European Patent Office

## Office européen des brevets

(19)

(11) Veröffentlichungsnummer: **0 325 154**
**A2**

(12) **EUROPÄISCHE PATENTANMELDUNG**

(21) Anmeldenummer: **89100389.9**

(51) Int. Cl.⁴: **C08L 67/06**

(22) Anmeldetag: **11.01.89**

(30) Priorität: **20.01.88 DE 3801454**

(43) Veröffentlichungstag der Anmeldung:
**26.07.89 Patentblatt 89/30**

(84) Benannte Vertragsstaaten:
**DE ES FR GB IT NL**

(71) Anmelder: **BASF Aktiengesellschaft**
**Carl-Bosch-Strasse 38**
**D-6700 Ludwigshafen(DE)**

(72) Erfinder: **Koenig, Ulrich, Dr.**
**Londoner Ring 83**
**D-6700 Ludwigshafen(DE)**
Erfinder: **Holoch, Jan, Dr.**
**Koenigsberger Strasse 22a**
**D-6906 Leimen(DE)**

(54) **Styrolarme ungesättigte Polyesterharze.**

(57) Die Erfindung betrifft styrolarme UP-Harze, die einen bei Raumtemperatur flüssigen Polyester mit niedrigem Maleinsäure-Gehalt, einem bei Raumtemperatur zähflüssigen bis festen Polyester mit hohem Maleinsäure-Gehalt, 5 - 25 Gew.% Styrol, sowie gegebenenfalls weitere Comonomere enthalten.

EP 0 325 154 A2

## Styrolarme ungesättigte Polyesterharze

Die Erfindung betrifft ungesättigte Polyesterharze mit verringertem Styrolgehalt.

Handelsübliche UP-Harze enthalten in der Regel als copolymerisierbares Monomeres Styrol in Mengen von mehr als 30-35 Gew.%. In jüngster Zeit hat es sich herausgestellt, daß Styrol, über längeren Zeitraum hinweg in größeren Mengen eingeatmet, zu gesundheitlichen Schäden führen kann. Aus diesem Grund wurde z.B. in der Bundesrepublik Deutschland 1987 die maximale Arbeitsplatzkonzentration an Styrol von 100 ppm auf 20 ppm gesenkt. Bei den handwerklichen Verarbeitungsverfahren kann dieser MAK-Wert mit den meisten UP-Harzen nicht mehr eingehalten werden. Es besteht daher das dringende Bedürfnis, die Styrolemission von UP-Harzen zu verringern, d.h., den Styrolgehalt der Harze abzusenken.

Verringert man bei herkömmlichen UP-Harzen den Styrolgehalt auf Werte unterhalb von etwa 30 Gew.%, dann steigt die Viskosität des Harzes an. Bei Viskositäten oberhalb von etwa 2 000 mPa.s (bei Raumtemperatur) ergeben sich aber Schwierigkeiten bei der Verarbeitung der Harze, insbesondere beim Tränken von Glasfasermatten. Die Fasern werden nicht mehr richtig benetzt, Luftblasen werden eingeschlossen.

Flüssige, styrolfreie ungesättigte Polyester mit geringem Maleinsäuregehalt und niedrigem Molekulargewicht sind bekannt. Sie sind aber reaktionsträge und bei Raumtemperatur, auch bei Zusatz von Comonomeren nicht härtbar. Beim Härten in der Wärme erhält man weiche Formkörper. Diese Harze sind nur als Additive, z.B. als Pastenharze verwendbar.

Der Erfindung lag daher die Aufgabe zugrunde, styrolarme ungesättigte Polyesterharze zu entwik- keln, die sich nach den üblichen Verfahren gut verarbeiten und härten lassen und nach der Aus- härtung Formkörper mit befriedigenden mechani- schen Eigenschaften ergeben.

Es wurde nun gefunden, daß diese Aufgabe gelöst wird, wenn man als Polyester ein Gemisch eines flüssigen, maleinsäurearmen Polyesters A mit einem zähflüssigen bzw. festen, maleinsäurereichen Polyester B einsetzt.

Gegenstand der Erfindung sind demzufolge styrolarme, ungesättigte Polyesterharze mit einer Viskosität bei 23° C von weniger als 2 000 mPa.s aus:

A. 15 - 60 Gew.% eines bei Raumtemperatur flüssigen Polyesters aus einer Diolkomponente und einer Dicarbonsäurekomponente, welche
a. 10 bis 50 Mol% Maleinsäure-Einheiten,
b. mehr als 10 Mol% Einheiten einer aliphatischen Dicarbonsäure und

c. mehr als 10 Mol% Einheiten einer aliphatischen Monocarbonsäure
enthält,

B. 20 - 80 Gew.% eines bei Raumtemperatur zähflüssigen bis festen Polyesters aus einer Diolkomponente und einer Dicarbonsäurekomponente, welche
a' mehr als 60 Mol% Maleinsäure-Einheiten,
b' weniger als 40 Mol% Einheiten einer aliphatischen oder aromatischen Dicarbonsäure, und
c' weniger als 10 Mol% Einheiten einer Monocarbonsäure enthält,

C. 5 - 25 Gew.% Styrol, sowie

D. 0 - 40 Gew.% weiteren Comonomeren.

Die Polyester A und B sind an sich bekannt. Der Polyester A allein ergibt bei der Härtung, auch zusammen mit Styrol oder anderen Comonomeren, weiche, wenig vernetzte Formkörper; der Polyester B allein ist, auch zusammen mit Comonomeren zu hochviskos und kann bei Raumtemperatur nicht verarbeitet werden.

Wenn man die beiden Polyester miteinander und mit geringen Mengen Styrol und ggf. weiteren Comonomeren in geeigneten Verhältnissen mischt, lassen sich UP-Harze mit Viskositäten (bei 23° C) von weniger als 2.000, vorzugsweise weniger als 1.500 mPa.s und insbesondere zwischen 400 und 1 000 mPa.s herstellen, die gut verarbeitbar sind.

Der Polyester A weist vorzugsweise mittlere Molekulargewichte zwischen 400 und 1 000, insbesondere zwischen 300 und 900 auf. Seine Viskosität bei 23° C soll unter 1 500, vorzugsweise zwischen 100 und 800 mPa.s liegen.

Er wird durch übliche Polykondensation einer Diolkomponente mit einer Dicarbonsäurekomponente, die als Kettenabbrecher eine Monocarbonsäure enthält, hergestellt.

Als Diolkomponente eignen sich z.B. Ethylenglykol, Propylenglykol-1,2, Propandiol-1,3, Butandiol- 1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit. Zusätzlich können als Kettenabbrecher auch monofunktionelle Alkohole wie z.B. Cyclohexanol, Ethyl- hexanol und Hydroxytricydodecan eingesetzt wer- den.

Die Dicarbonsäurekomponente enthält
a. 10 - 50, vorzugsweise 20 - 40 Mol% Maleinsäure-Einheiten

b. mehr als 1, vorzugsweise mehr als 20 Mol%-Einheiten einer aliphatischen Dicarbonsäure mit vorzugsweise 4 bis 10 Kohlenstoffatomen im Alkylrest, und

c. mehr als 10, vorzugsweise mehr als 35 Mol% einer aliphatischen Monocarbonsäure mit vorzugsweise 6 bis 10 Kohlenstoffatomen im Alkylrest.

Zur Bildung der Einheiten a. sind Maleinsäure und Fumarsäure und deren Ester, insbesondere aber Maleinsäureanhydrid geeignet. Für die Einheiten b. kommen z.B. Adipinsäure, Bernsteinsäure, Glutarsäure oder Sebacinsäure in Frage; für die Einheiten c. z.B. Ethylhexansäure, Cyclohexancarbonsäure oder Octansäure.

Der Polyester A ist im erfindungsgemäßen Harz in Mengen von 15 bis 60, vorzugsweise von 30 bis 50 Gew.%, bezogen auf A + B + C + D, enthalten.

Der Polyester B weist vorzugsweise ein Molekulargewicht zwischen 400 und 900, insbesondere zwischen 300 und 800 auf. Seine Viskosität bei 23°C soll über 5 000, vorzugsweise zwischen 5 000 und 100 000, bei 100°C zwischen 100 und 800 mPa.s liegen. Er wird ebenfalls durch übliche Polykondensation hergestellt, wobei wieder die oben genannten Diole, vorzugsweise im Überschuß gegenüber der Dicarbonsäurekomponente, eingesetzt werden. Die Dicarbonsäurekomponente enthält

a' mehr als 60, vorzugsweise mehr als 75% Mol% Maleinsäure-Einheiten

b' weniger als 40, vorzugsweise weniger als 25 Mol% Einheiten einer aliphatischen oder aromatischen Dicarbonsäure, und

c' weniger als 10, vorzugsweise weniger als 5 Mol% Einheiten einer Monocarbonsäure.

Zur Bildung der Einheiten b sind neben den unter b genannten Säuren noch Phthalsäure, Isophthalsäure, Terephthalsäure, Tetrahydrophthalsäure, sowie Endomethylentetrahydrophthalsäure und Hexachlorendomethylentetrahydrophthalsäure geeignet.

Der Polyester B ist in den erfindungsgemäßen Harzen in Mengen von 20 bis 80, vorzugsweise von 30 bis 60 Gew.% enthalten.

Der Styrolgehalt der erfindungsgemäßen Harze beträgt 5 bis 25, vorzugsweise 8 bis 15 Gew.%. Daneben kann das Harz noch bis zu 40, vorzugsweise 5 bis 25 Gew.% anderer, copolymerisierbarer Monomerer enthalten. In Frage kommen z.B. Maleinsäureanhydrid, Mono- und Diester der Maleinsäure oder Fumarsäure, Ester der Acrylsäure und Methacrylsäure, wie Trimethylolpropantri-(meth)acrylat und Dimethylolpropandi(meth)acrylat.

Der Zusatz derartiger Comonomerer, insbesondere solcher mit mehreren Doppelbindungen, bewirkt, daß ausgehärtete Formkörper härter werden.

Gegenstand der Erfindung sind ferner UP-Harz-Formulierungen, die neben dem erfindungsgemäßen Harz noch übliche Zusatzstoffe enthalten. In Frage kommen z.B.:

Füllstoffe, wie Kreide, Kaolin, Quarzmehl, Dolomit, Schwerspat, Metallpulver, Aluminiumoxidhydrat, Zement, Talkum, Kieselgur sowie Pigmente,

Verstärkungsfasern, wie Glas-, Kohlenstoff-, Asbest- und Cellulosefasern sowie synthetische organische Fasern, z.B. aus Polycarbonsäureestern, Polycarbonat oder Polyamiden,

Inhibitoren, wie Hydrochinone, Chinone, Nitrobenzole, N-Nitrosoverbindungen, Salze des zweiwertigen Kupfers und quaternäre Ammoniumsalze,

Polymerisationsinitiatoren, wie Benzoylperoxid, Methylethylketonperoxid, tert.-Butylperoktoat, tert.-Butylperbenzoat, Cyclohexanonperoxid, Acetylacetonperoxid, Perketale, Percarbonate, C-C-labile Verbindungen und Azoverbindungen,

Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin, Imidazole, tertiäre Phosphine, organische Säuren,

Schrumpfmindernde Polymerisate, wie Polystyrol, Polymethylmethacrylat, Polyvinylacetat, Polyethylen, Polybutadien und Propfcopolymere, Copolymere sowie Kondensationspolymere, wie gesättigte Polyester oder Polyesterurethane,

Elastifizierende Zusätze, z.B. kautschukartige Blockcopolymere und modifiziertes Polytetrahydrofuran,

Formtrennmittel, flammhemmende Stoffe, Weichmacher.

Zweckmäßigerweise enthalten die Formulierungen 0,1 bis 1 Gew.% üblicher, die Styrolverdunstung verhindernde Mittel, insbesondere eines Paraffins.

Zur Herstellung der erfindungsgemäßen Harze werden die Komponenten gemischt, wobei die Komponente B zweckmäßigerweise geschmolzen oder in C + D gelöst wird. Die Zusatzstoffe werden nach üblichen Verfahren zugemischt.

Die Harze bzw. Formulierungen können zur Herstellung von Laminaten durch Tränken von Glasfasermatten verwendet werden. Man kann sie aber auch nach anderen handwerklichen Verfahren, wie z.B. Wickeln, dem Filmstrahlverfahren oder Handauflegeverfahren zu Formkörpern verarbeiten und aushärten.

Die Steifigkeit ausgehärteter Produkte läßt sich durch anschließendes Erhitzen, z.B. 30 min bis 2 h lang auf 150 bis 200°C erhöhen. Die in den Beispielen genannten Teile und Prozente beziehen sich auf das Gewicht.

Beispiel 1 (Polyester A 1)

294 Teile Maleinsäureanhydrid, 876 Teile Adipinsäure, 866 Teile Propylenglykol und 432 Teile Ethylhexansäure werden unter Rühren und Darüberleiten von Stickstoff innerhalb von 2 Stunden auf 200° C aufgeheizt. Bei dieser Temperatur wird die Kondensation fortgesetzt, bis die Viskosität (Raumtemperatur) des Polyesters 1 000 mPa.s beträgt, was einem mittleren Molekulargewicht von etwa 900 entspricht.

Beispiel 2 (Polyester B 1)

1 372 Teile Maleinsäureanhydrid und 1 596 Teile Propylenglykol werden unter Rühren und Darüberleiten von Stickstoff innerhalb von 3 Stunden auf 190° C aufgeheizt. Bei dieser Temperatur wird die Kondensation 15 Stunden fortgesetzt, bis eine Säurezahl von 5 erreicht ist. Die Viskosität des Polyesters bei 100° C beträgt 210 mPa.s, das mittlere Molekulargewicht etwa 600.

Beispiel 3

600 g Polyester A 1 werden bei 80° C aufgeschmolzen und mit 400 g Polyester B 1 gemischt. In der Mischung wurden 5% Maleinsäureanhydrid gelöst, dann wurden 15% Styrol zugesetzt. Die Viskosität des so erhaltenen UP-Harzes bei 23° C war 1 070 mPa.s.

Reaktivität bei 20° C mit 4% Cyclohexanonperoxid und 1% Cobaltoctat (Lösung in Phthalat, mit 1% Cobalt): Zeit von 25° C bis 35° C: 5 min; Zeit von 25° C bis zum Temperaturmaximum: 15 min; Temperaturmaximum: 84° C. Mit dem UP-Harz wurde ein 4 mm dickes Laminat (ca. 30 x 30 cm) hergestellt durch Tränken von 4 Glasmatten. Die Glasmattenlagen wogen 450 g/m².

Gehärtet wurde unter einer Polyesterfolie. Das gehärtete Laminat wurde bei 200° C 2 Stunden getempert.

Die mechanischen Eigenschaften waren:
Biegefestigkeit: 82 N/mm²
Biege-E-Modul: 3 700 N/mm²
Reißdehnung: 3,0%

**Ansprüche**

1. Styrolarme, ungesättigte Polyesterharze mit einer Viskosität bei 23° C von weniger als 2 000 mPa.s aus:

A. 15 - 60 Gew.% eines bei Raumtemperatur flüssigen Polyesters aus einer Diolkomponente und einer Dicarbonsäurekomponente, welche
a. 10 bis 50 Mol% Maleinsäure-Einheiten,
b. mehr als 10 Mol% Einheiten einer aliphatischen Dicarbonsäure und
c. mehr als 10 Mol% Einheiten einer aliphatischen Monocarbonsäure
enthält,

B. 20 - 80 Gew.% eines bei Raumtemperatur zähflüssigen bis festen Polyesters aus einer Diolkomponente und einer Dicarbonsäurekomponente, welche
a. mehr als 60 Mol% Maleinsäure-Einheiten,
b. weniger als 40 Mol% Einheiten einer aliphatischen oder aromatischen Dicarbonsäure, und
c. weniger als 10 Mol% Einheiten einer Monocarbonsäure enthält,

C. 5 - 25 Gew.% Styrol, sowie

D. 0 - 40 Gew.% weiteren Comonomeren.

2. Styrolarme Polyesterharze nach Anspruch 1, dadurch gekennzeichnet, daß der Polyester A eine Viskosität bei 23° C von weniger als 1 500 mPa.s hat.

3. Styrolarme Polyesterharze nach Anspruch 1, dadurch gekennzeichnet, daß der Polyester B eine Viskosität bei 23° C von mehr als 5 000 mPa.s hat.

4. Styrolarme Polyesterharze nach Anspruch 1, gekennzeichnet durch einen Styrolgehalt von weniger als 15 Gew.%.

5. Styrolarme Polyesterharze nach Anspruch 1, dadurch gekennzeichnet, daß sie als Komponente D 5 - 25 Gew.% Maleinsäureanhydrid, eines Acrylsäureesters oder Methacrylsäureesters enthalten.

6. UP-Harz-Formulierungen, enthaltend ein Polyesterharz nach Anspruch 1, sowie übliche Zusatzstoffe, wie Füllstoffe, Verstärkungsfasern, Inhibitoren, Polymerisationsinitiatoren, Härtungsbeschleuniger, schrumpfmindernde und elastifizierende Polymerisate, Formtrennmittel, Flammschutzmittel und Weichmacher.

7. UP-Harz-Formulierungen nach Anspruch 6, gekennzeichnet durch einen Gehalt von 0,1 - 1 Gew.%, bezogen auf A + B + C + D, eines die Styrolverdunstung verhindernden Mittels, insbesondere eines Paraffins.